(19) Europäisches Patentamt

European Patent Office

Office européen des brevets

(11) Veröffentlichungsnummer: **0 412 354 A2**

(12) **EUROPÄISCHE PATENTANMELDUNG**

(21) Anmeldenummer: 90114209.1

(22) Anmeldetag: 25.07.90

(51) Int. Cl.⁵: **G11B 15/02**, G11B 27/30, H04N 5/92, G09B 5/06

(30) Priorität: 08.08.89 DE 3926093

(43) Veröffentlichungstag der Anmeldung:
**13.02.91 Patentblatt 91/07**

(84) Benannte Vertragsstaaten:
**AT BE CH DE DK ES FR GB GR IT LI LU NL SE**

(71) Anmelder: **ALPERMANN + VELTE GMBH**
**Berghauser Strasse 62**
**D-5630 Remscheid 1(DE)**

(72) Erfinder: **Velte, Bernd**
**Berghauser Strasse 62**
**W-5630 Remscheid 1(DE)**

(74) Vertreter: **Patentanwälte Dr. Solf & Zapf**
**Schlossbleiche 20 Postfach 13 01 13**
**D-5600 Wuppertal 1(DE)**

(54) **Interaktives video-system.**

(57) Die Erfindung betrifft ein interaktives Video-System zum Aufzeichnen und/oder zur Wiedergabe eines mindestens ein Videobild darstellenden Videosignals auf bzw. von einem Trägermedium eines Video-Aufzeichnungs- und Abspielgerätes. Jedem Videobild wird auf dem Video-Trägermedium ein Adreß-Signal zugeordnet, und die Wiedergabe mindestens eines bestimmten Videobildes erfolgt in Abhängigkeit von auf einem Trägermedium gespeicherten Datensignalen eines Software-Programms und/oder in Abhängigkeit von von außen eingegebenen Daten anhand der Adreß-Signale. Die Datensignale des Software-Programms werden auf dem das Videosignal mit den zugehörigen Adreß-Signalen enthaltenden Video-Trägermedium, und zwar insbesondere des Videosignals, aufgezeichnet.

EP 0 412 354 A2

## INTERAKTIVES VIDEO-SYSTEM

Die vorliegende Erfindung betrifft ein interaktives Video-System zum Aufzeichnen und/oder zur Wiedergabe eines mindestens ein Videobild darstellenden Videosignals auf bzw. von einem Trägermedium eines Video-Aufzeichnungs- und Abspielgerätes, wobei jedem Videobild auf dem Video-Trägermedium ein Adreß-Signal zugeordnet wird und die Wiedergabe mindestens eines bestimmten Videobildes in Abhängigkeit von auf einem Trägermedium gespeicherten Datensignalen eines Software-Programms und/oder in Abhängigkeit von von außen eingegebenen Daten anhand der Adreß-Signale erfolgt.

In diesem Zusammenhang umfaßt der Begriff "Video" selbstverständlich auch gegebenenfalls vorgesehene, zugehörige Audiosignale.

Interaktive Video-Systeme der gattungsgemäßen Art sind bereits für die verschiedenartigsten Anwendungen bekannt.

Dabei kann ein Benutzer einen Dialog mit dem Video führen, d.h. auf den Ablauf des Videos bzw. von Bildsequenzen einwirken. Typische Anwendungen sind beispielsweise Ausbildungsprogramme und Spiele, wobei dem Benutzer über das jeweilige Software-Programm durch Einspielen einer bestimmten Videosequenz eine Aufgabe gestellt wird, die insbesondere im sogenannten Multiple-Choice-Verfahren durch Eingabe externer Daten beantwortet werden muß, indem eine Antwort aus einem vorgegebenen "Menü" ausgewählt wird. In Abhängigkeit von dieser Antwort erfolgt eine Reaktion des Videos durch Einspielen weiterer Videosequenzen, die beispielsweise die Bestätigung einer richtigen Antwort, die Aufforderung zum erneuten Versuch einer Antwort oder eine Musterlösung enthalten können. Bevorzugt werden interaktive Video-Systeme für Schulungen im Hochschulbereich, wie beispielsweise in der Medizin, eingesetzt, wobei der Lerneffekt durch die visuelle Aufnahme als sehr gut bezeichnet werden kann.

Bei bekannten Systemen werden zu Steuerzwecken üblicherweise Rechner bzw. Computer (z.B. PC) eingesetzt. Dabei ist das jeweilige Programm beispielsweise auf einer Datendiskette des Computers abgespeichert. Der Computer ist mit einem Video-Abspielgerät über ein serielles Interface und eine Steuerleitung derart verbunden, daß er in Abhängigkeit von dem Programm und/oder von über eine Eingabeeinheit, z.B. eine Tastatur, eingegebenen Daten das Video-Abspielgerät ansteuert. Hierzu enthält das Computer-Programm an bestimmten Stellen des Programmablaufs die entsprechenden Adressen der jeweils einzuspielenden Videobilder bzw. Bildsequenzen. Der Benutzer kann so mit dem Video "kommunizieren".

Nachteilig bei den bekannten Systemen ist nun einerseits, daß als Video-Trägermedium zumeist eine Bildplatte einge setzt wird, da auf Bildplatten die erforderliche Adressierung der Videobilder relativ problemlos möglich ist. Allerdings eignen sich daher die bekannten Systeme aus Kostengründen nur bedingt für den Amateur- und Privatbereich, da sie die Beschaffung eines Bildplatten-Abspielgerätes erforderlich machen. Außerdem sind stets zwei aneinander angepaßte Software-Medien erforderlich, nämlich erstens das Video-Trägermedium mit dem adressierten Videosignal und zweitens das Software-Trägermedium des Computers mit dem hinsichtlich der Adressierung an das Videosignal angepaßten Programm. Die bekannten Systeme sind demzufolge aufwendig und daher wenig wirtschaftlich sowohl bezüglich der Hardware als auch bezüglich der Software, wobei mit dem Bildplattengerät eine Hardware erforderlich ist, die üblicherweise nicht im Privat- und Amateurbereich vorhanden ist. Ferner können sich für den Benutzer auch Anwendungsprobleme dadurch ergeben, daß durch die Zweiteilung der Software Vertauschungen auftreten können, so daß dann das Video und das Programm nicht mehr "zueinander passen".

Der vorliegenden Erfindung liegt daher die Aufgabe zugrunde, ausgehend von dem beschriebenen Stand der Technik ein interaktives Videosystem zu schaffen, welches sich durch erhöhte Wirtschaftlichkeit und vereinfachte Anwendung auch für den Amateur- und Privatbereich eignet und dabei insbesondere auch übliche, im Privatbereich oftmals ohnehin vorhandene Hardware einbezieht.

Erfindungsgemäß wird dies dadurch erreicht, daß die Datensignale des Software-Programms auf dem das Videosignal mit den zugehörigen Adreß-Signalen enthaltende Video-Trägermedium aufgezeichnet werden. Aufgrund der Erfindung ist folglich nur noch ein Trägermedium für das adressierte Video und das Software-Programm erforderlich, wodurch das erfindungsgemäße System außerordentlich benutzerfreundlich ist, da Video und Programm stets "zueinander passen", d.h. die oben erwähnte Verwechslungsgefahr ist hiermit absolut ausgeschlossen.

In einer besonders vorteilhaften Ausgestaltung der Erfindung werden als Video-Abspielgerät ein "normaler" Videorecorder und als Video-Trägermedium ein zu dem Videorecorder passendes Videoband (Videokassette) eingesetzt. Dies bedeutet, daß der Benutzer bei Vorhandensein eines handelsüblichen Videorecorders und eines Fernsehgerätes nur noch das entsprechende Videoband sowie ein Steuergerät benötigt. Das erfindungsgemäße System eignet sich daher für ein sehr breites Anwendungsspektrum und gerade auch für den Amateur-und Privatbereich. Hierdurch können beispielsweise auch "einfachere" Lernprogramme, wie Verkehrsschulungen und dergleichen, sowie "Nachschlagewerke", wie Kataloge, Lexika usw., wirtschaftlich realisiert werden. Kurz gesagt, das erfindungsgemäße System eignet sich praktisch für "jedermann".

Erfindungsgemäß werden nun die Datensignale des Software-Programms - ebenso wie die Videosignale selbst - innerhalb von Datenzeilen des Videosignals aufgezeichnet. Besonders vorteilhaft ist es, wenn die Programm-Datensignale in der sogenannten "vertikalen Austastlücke" bzw. innerhalb von sich an diese anschließenden Leerzeilen enthalten sind. Auch die parallelen Adreß-Signale der Videobilder sind vorzugsweise innerhalb von diesen Leerzeilen im Bereich der vertikalen Austastlücken untergebracht. Üblicherweise besteht jede vertikale Austastlücke aus ca. 15 Leerzeilen, von denen eine Zeile oder aber - aus Gründen der Lesesicherheit - zwei Zeilen für die Adressierung verwendet werden, so daß die restlichen Leerzeilen noch gut zur Auf nahme der Programm-Datensignale ausreichen.

Alternativ zu dieser Unterbringung der Programm-Software in den vertikalen Austastlücken liegt es jedoch ebenfalls im Rahmen der Erfindung, die Datensignale des Programms anstelle der Videobild-Signale in den entsprechenden Datenzeilen aufzuzeichnen, wobei in diesem Fall zweckmäßigerweise während dieser Zeitspanne ein Videobild von einem speziellen Generator, z.B. einem Standbild-Generator (Bildspeicher), einem Schrift-und/oder Grafik-Generator, einem Monochrom-Generator oder dergleichen, erzeugt bzw. "geliefert" wird.

Innerhalb des erfindungsgemäßen Video-Systems kann - im Vergleich zu den bisher erforderlichen Computern - vorteilhafterweise ein sehr preiswert und wirtschaftlich realisierbares Steuergerät eingesetzt werden, welches ausschließlich für den speziellen Einsatz auszulegen ist. Dies bedeutet, daß alle diejenigen Funktionen und Möglichkeiten eines Computers, die für die erfindungsgemäße Anwendung entbehrlich und unnötig sind, wie beispielsweise komplexe Rechenfunktionen, auch "weggelassen" werden können. Statt dessen enthält das erfindungsgemäße Steuergerät vorteilhafterweise solche Zusatzfunktionen, die ein üblicher Computer nicht bieten würde, wie beispielsweise den oben bereits erwähnten Standbild-Generator. Ferner ist als Eingabeeinheit für Antworten und sonstige Befehle auch eine vereinfachte Tastatur oder auch ein sogenannter Joy-Stick ausreichend, da üblicherweise eine vollständige Schreibtastatur zum Dialog mit dem Video entbehrlich ist.

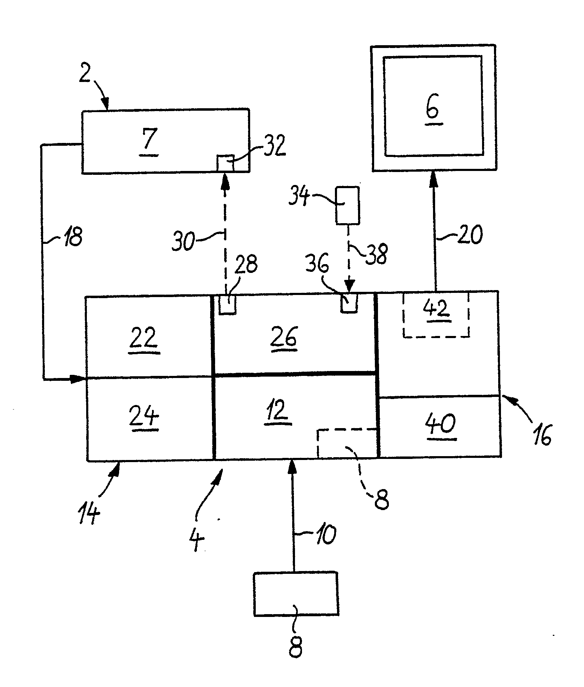

Vorteilhafte Ausgestaltungen der Erfindung sind Gegenstand weiterer Unteransprüche sowie der folgenden Beschreibung. Anhand der Zeichnung soll im folgenden die Erfindung bei spielhaft näher erläutert werden. Dabei zeigt die einzige Zeichnungsfigur ein vereinfachtes Blockschaltbild der Hardware eines erfindungsgemäßen Video-Systems.

Das erfindungsgemäße, interaktive Video-System besteht in der dargestellten Ausführungsform aus drei Hauptkomponenten, nämlich einem Video-Aufzeichnungs- und/oder Abspielgerät 2, im folgenden kurz "Videogerät" genannt, einem Steuergerät 4 und einem Video-Wiedergabegerät 6. Als Videogerät 2 wird erfindungsgemäß ein handelsüblicher Videorecorder 7 verwendet, und bei dem Video-Wiedergabegerät 6 kann es sich um ein Fernsehgerät oder einen Datenmonitor mit Videowiedergabefähigkeit handeln. Weiterhin ist eine Eingabeeinheit 8 vorgesehen, die entweder als externe Komponente ausgeführt und hierbei über eine Verbindungsleitung 10 an dem Steuergerät 4 angeschlossen oder aber in das Steuergerät 4 integriert ist, was in der Zeichnung gestrichelt dargestellt ist.

Das Steuergerät 4 besitzt erfindungsgemäß einen zentralen Steuerteil (Steuerrechner) 12, einen Video-Eingangsteil 14 und einen Video-Ausgangsteil 16. Das Videogerät 2 ist erfindungsgemäß ausgangsseitig über eine Videoleitung 18 mit dem Steuergerät 4, d.h. mit dem Eingangsteil 14, verbunden. Auch das Wiedergabegerät 6 ist mit dem Videogerät 2 verbunden, jedoch vorzugsweise mittelbar über die Videoleitung 18, das Steuergerät 4 und eine an dem Video-Ausgangsteil 16 angeschlossene Videoleitung 20. Der Video-Eingangsteil 14 besitzt erfindungsgemäß einen Datenleser 22 und einen Adreßleser 24.

In einer vorteilhaften Ausführungsform der Erfindung steuert das Steuergerät 4 das Videogerät 2 bzw. den Videorecorder 7 über eine drahtlose Fernsteuereinrichtung an, wozu das Steuergerät 4 einen Fernsteuerteil 26 aufweist. Vorzugsweise wird eine Infrarot (IR)-Fernsteuerung eingesetzt, da diese üblicherweise auch bei allen herkömmlichen Videorecordern vorhanden ist. Der Fernsteuerteil 26 besitzt einen Sender 28, der Steuersignale nach einem bestimmten Steuercode über eine gestrichelt eingezeichnete Signalverbindung 30 an einen Empfänger 32 des Videogerätes 2 sendet. Bei diesen Steuersignalen handelt es sich genau um diejenigen Signale, die ansonsten auch ein zu dem Videorecorder 7 gehörender Taschensender 34 abgibt. Damit bei dem erfindungsgemäßen System verschiedenartige Videogeräte 2 bzw. Videorecorder 7 eingesetzt werden können, ist erfindungsgemäß die Fernsteuereinrichtung hinsichtlich ihres Steuercodes zur Anpassung an den Steuercode des jeweiligen Videogerätes 2 bzw. an den Steuercode der Fernsteuerung des Videorecorders 7 selbstlernend ausgebildet. Hierzu weist der Fernsteuerteil 26 einen Empfänger 36 zum Empfangen der von dem Taschensender 34 über eine Signalverbindung 38 abgegebenen, kodierten Steuersignale auf. Somit ist es möglich, dem Fernsteuerteil 26 des Steuergerätes 4 den jeweiligen Steuercode des Videorecorders 7 durch "Einlesen" aller Funktionssignale in einer vorgegebenen Reihenfolge einzugeben.

Weiterhin ist es vorteilhaft, wenn das Steuergerät 4 einen auf das Video-Wiedergabegerät 6 wirkenden Schrift- und/oder Grafik-Generator 40, einen ebenfalls auf das Wiedergabegerät 6 wirkenden Bildspeicher 42 (gestrichelt eingezeichnet) und/oder einen nicht dargestellten Monochrom-Generator aufweist. Vorzugsweise sind alle diese Zusatzkomponenten in den Video-Ausgangsteil 16 integriert.

Auf dem erfindungsgemäß als Videoband (Videokassette) ausgebildeten Video-Trägermedium des Videogerätes 2 sind erfindungsgemäß sowohl Videosignale, die Videobilder bzw. Bildsequenzen darstellen, als auch zu den Videobildern parallele Adreß-Signale, als auch Datensignale eines Software-Programms aufgezeichnet. Wie oben bereits erläutert, sind vorzugsweise sowohl die Programm-Datensignale als auch die Adreß-Signale in Leerzeilen des Videosignals, d.h. im Bereich von vertikalen Austastlücken, enthalten. Dies bedeutet, daß die Adreß-Signale erfindungsgemäß im "Vertical Interval Time-Code" kodiert sind, d.h. es handelt sich um sog. VITC-Signale.

Im folgenden soll nun die Funktion des erfindungsgemäßen, interaktiven Video-Systems während der Anwendung, d.h. bei der Wiedergabe, erläutert werden.

Die auf dem in dem Videorecorder 7 ablaufenden Videoband aufgezeichneten Signale gelangen über die Videoleitung 18 in den Video-Eingangsteil 14 des Steuergerätes 4. Der Datenleser 22 erfaßt hier die Programmdaten des Software-Programms und der Adreßleser 24 die Adreß-Daten, d.h. die VITC-Signale. Die eigentlichen Videosignale werden über den Video-Ausgangsteil 16 und die Videoleitung 20 dem Wiedergabegerät 6 zugeführt, wo sie in eine Bilddarstellung umgeformt werden. Der Steuerteil 12 steuert in Abhängigkeit von den durch den Eingangsteil 14 erfaßten Programm-und Adreßdaten und/oder in Abhängigkeit von über die Eingabeeinheit 8 eingegebenen Befehls- oder Antwort-Daten über den zuvor in dem oben beschriebenen Selbstlernverfahren programmierten Fernsteuerteil 26, d.h. über den Sender 28, die Signalverbindung 30 und den Empfänger 32 die Lauf-Funktionen des Videogerätes 2, d.h. dessen Vorlauf, Wiedergabe und Rücklauf, um so, je nach Programmablauf, bestimmte Videosequenzen einzuspielen. Dabei können vorteilhafterweise auch Schrift- und/oder Grafikbilder durch den Steuerteil 12 bzw. durch das Programm veranlaßt über den Schrift-und/oder Grafik-Generator 40 erzeugt werden. Ferner ist es möglich, für eine reaktionszeitunabhängige Bilddarstellung über den Bildspeicher 42 Standbilder zu erzeugen, so daß der Benutzer vorteilhafterweise beliebig viel Zeit zum Nachdenken und zur Reaktion zur Verfügung hat. Dabei kann der Bildspeicher 42 natürlich auch die von dem Generator 40 erzeugten Grafik- bzw. Schriftbilder speichern. Zudem kann das Wiedergabegerät 6 auch auf eine Monochrom-Darstellung geschaltet werden.

Die Erfindung ist nicht auf das dargestellte und beschriebene Ausführungsbeispiel beschränkt, sondern umfaßt auch alle im Sinne der Erfindung gleichwirkenden Ausführungen. Beispielsweise ist es ebenfalls möglich, das Video-Wiedergabegerät 6 unmittelbar an das Videogerät 2 anzuschließen. Jedoch ist die erfindungsgemäße Ausführung insofern von besonderem Vorteil, als hierdurch unabhängig von den aufgezeichneten Videosignalen mit dem Steuergerät 4 die oben erwähnten, zusätzlichen Bilddarstellungen erzeugt werden können. Darüber hinaus ist es ebenfalls möglich, über eine entsprechende Tastatur einen Klarschrifttext in das Videobild einzublenden.

## Ansprüche

1. Interaktives Video-System zum Aufzeichnen und/oder zur Wiedergabe eines mindestens ein Videobild darstellenden Videosignals auf bzw. von einem Trägermedium eines Video-Aufzeichnungs- und Abspielgerätes, wobei jedem Videobild auf dem Video-Trägermedium ein Adreß-Signal zugeordnet wird und die Wiedergabe min-destens eines bestimmten Videobildes in Abhängigkeit von auf einem Trägermedium gespeicherten Datensignalen eines Software-Programms und/oder in Abhängigkeit von von außen eingegebenen Daten anhand der Adreß-Signale erfolgt,
**dadurch gekennzeichnet**, daß die Datensignale des Software-Programms auf dem das Videosignal mit den zugehörigen Adreß-Signalen enthaltenden Video-Trägermedium aufgezeichnet werden.

2. System nach Anspruch 1,
**dadurch gekennzeichnet**, daß die Datensignale des Software-Programms in Datenzeilen des Videosignals, insbesondere innerhalb von im Bereich von vertikalen Austastlücken vorhandenen Leerzeilen des Videosignals, aufgezeichnet werden.

3. System nach Anspruch 1 oder 2,
**dadurch gekennzeichnet**, daß die Adreß-Signale als parallel zu jedem Videobild aufgezeichnete Time-Code-Signale, insbesondere als in vertikalen Austastlücken des Videosignals aufgezeichnete VITC-Signale, ausgebildet sind.

4. System nach einem oder mehreren der Ansprüche 1 bis 3,

**dadurch gekennzeichnet,** daß als Video-Aufzeichnungs- und Abspielgerät (2) ein Videorecorder (7) und als Video-Trägermedium ein zu dem Videorecorder (7) passendes Videoband verwendet werden.

5. System nach einem oder mehreren der Ansprüche 1 bis 4,

**gekennzeichnet durch** ein die Wiedergabe steuerndes Steuergerät (4) mit einem zentralen Steuerteil (12) und mit einem Video-Eingangsteil (14), mit dem das Video-Aufzeichnungs- und Abspielgerät (2) ausgangsseitig über eine Videoleitung (18) verbunden ist.

6. System nach Anspruch 5,

**dadurch gekennzeichnet,** daß der Video-Eingangsteil (14) des Steuergerätes (4) einen Datenleser (22) für das Software-Programm sowie einen Adreßleser (24) für die Adreß-Signale der Videobilder aufweist.

7. System nach einem oder mehreren der Ansprüche 1 bis 6,

**dadurch gekennzeichnet,** daß das Steuergerät (4) das Video-Aufzeichnungs- und Abspielgerät (2) über eine insbesondere drahtlose Fernsteuereinrichtung ansteuert.

8. System nach Anspruch 7,

**dadurch gekennzeichnet,** daß die Fernsteuereinrichtung hinsichtlich ihres Steuercodes zur Anpassung an den Steuercode des Video-Aufzeichnungs- und Abspielgerätes (2) selbstlernend ausgeführt ist.

9. System nach einem oder mehreren der Ansprüche 1 bis 8,

**dadurch gekennzeichnet,** daß ein Video-Wiedergabegerät (6) mittelbar über das Steuergerät (4) mit dem Video-Aufzeichnungs- und Abspielgerät (2) verbunden ist.

10. System nach Anspruch 9,

**dadurch gekennzeichnet,** daß das Steuergerät (4) ein Video-Ausgangsteil (16) aufweist, welches ausgangsseitig mit dem Video-Wiedergabegerät (6) über eine Videoleitung (20) verbunden ist.

11. System nach Anspruch 9 oder 10,

**gekennzeichnet durch** einen auf das Video-Wiedergabegerät (6) wirkenden Schrift- und/oder Grafik-Generator (40).

12. System nach einem oder mehreren der Ansprüche 9 bis 11, **gekennzeichnet durch** einen auf das Video-Wiedergabegerät (6) wirkenden Bildspeicher (42).